# EUROPEAN PATENT SPECIFICATION

(11) **EP 3 900 987 B1**
(45) Date of publication and mention of the grant of the patent: **10.06.2026**
(21) Application number: 21169439.3
(22) Date of filing: 20.04.2021
(51) Int. Cl.: B60S 1/08, B60S 1/04

(54) **SMART WIPER SYSTEM**
INTELLIGENTES WISCHERSYSTEM
SYSTÈME D'ESSUIE-GLACE INTELLIGENT

(30) Priority: 20.04.2020 IN 202041016875
(43) Date of publication of application: 27.10.2021
(73) Proprietor: Rosemount Aerospace Inc., Burnsville, MN 55306 (US)
(72) Inventor: BOJJANAPALLI, Muralidhar Rao, 500072 Hyderabad (IN); DEVARAKONDA, Naveen Kumar, 560066 Bengalore (IN); VALLAMKONDU, Aswin Kumar, 560036 Bengalore (IN)
(74) Representative: Dehns

(56) References cited:
- EP-A1- 0 691 249
- WO-A1-2010/124620
- WO-A2-90/05654
- DE-A1- 102008 001 568

## Description

### BACKGROUND

The present disclosure relates to windshield wiper systems, and in particular to a windshield wiper system used on an aircraft.

Aircraft windshield wiper systems are used to wipe and clean water or other debris from an aircraft windshield, allowing better visibility out the windshield for both the pilot and co-pilot. Currently, the rotation, sweep limits, and parking positions of the wipers are achieved by controlling the angular position of the wiper output shaft which is attached to an end of each wiper of the windshield wiper system. Software or other code is used to control the angular position of the wiper output shaft through a motor or actuator. Currently, there is no feedback from windshield wiper systems, and the theoretical position of the wiper blade may not represent the actual position of the wiper blade. Flexing of the wiper blade, degradation of components, and external forces such as higher than predicted wind velocities can cause the actual position of the wiper blade to vary from the theoretical position. If the actual position of the wiper blade varies enough, the wiper blade can sweep off the windshield and onto the frame surrounding the windshield, this is called over-sweep. When over-sweep occurs, unpredicted additional loads are applied to the wiper motor and the wiper blade causing damage to the wiper blade and shortening the useful lifespan of the wiper motor and the wiper blade. Windshield wiper systems are disclosed in DE 10 2008 0015628 or WO-A-90/05654.

### SUMMARY

In one example, a windshield wiper system is provided as defined by claim 1.

In another example, a method of operating a windshield wiper system for use on a windshield of an aircraft is provided as defined by claim 6.

### BRIEF DESCRIPTION OF THE DRAWINGS

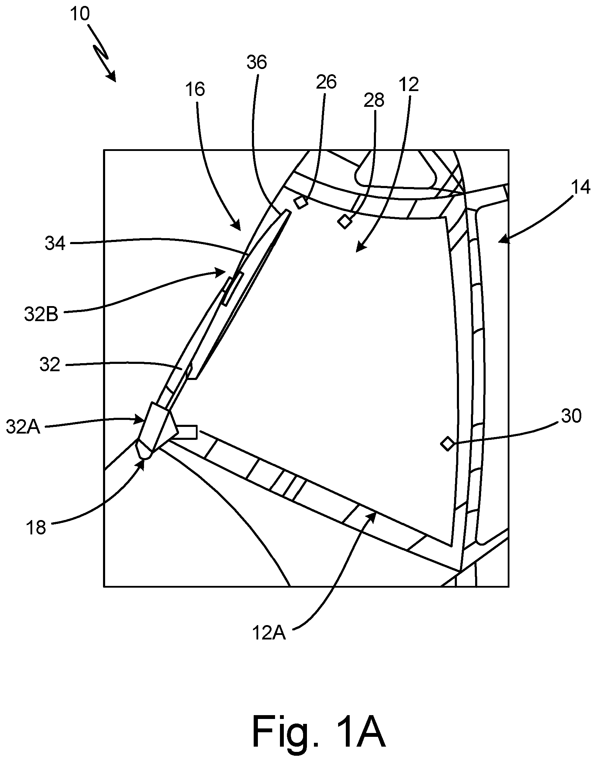

FIG. 1A is a perspective view of a windshield wiper system in a first position.

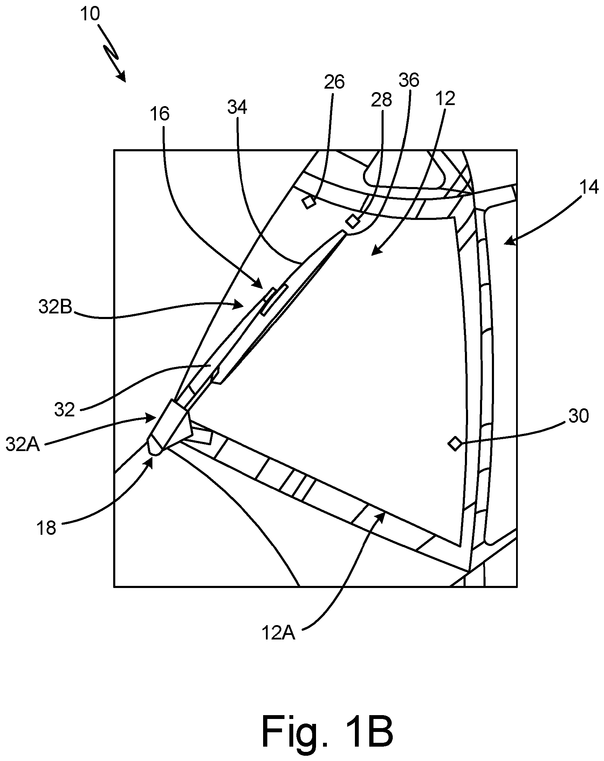

FIG. 1B is a perspective view of the windshield wiper system in a second position.

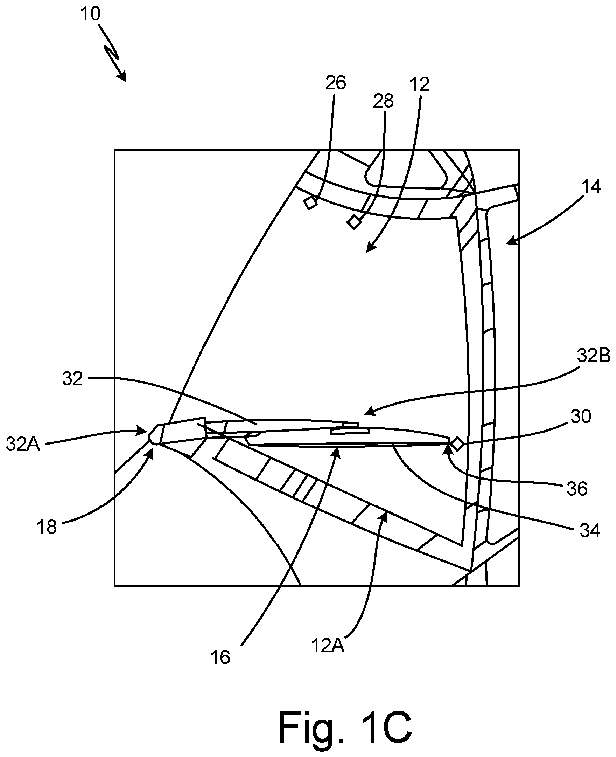

FIG. 1C is a perspective view of the windshield wiper system in a third position.

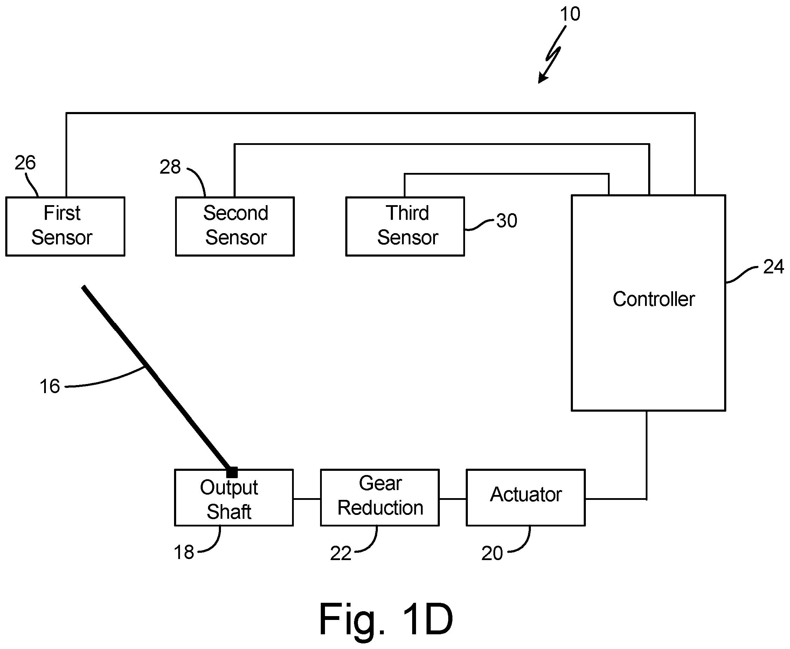

FIG. 1D is a block diagram of the windshield wiper system.

### DETAILED DESCRIPTION

FIG. 1A is a perspective view of windshield wiper system (WWS) 10 in a first position on windshield 12 of aircraft 14. FIG. 1B is a perspective view of WWS 10 in a second position on windshield 12 of aircraft 14. FIG. 1C is a perspective view of WWS 10 in a third position on windshield 12 of aircraft 14. FIG. 1D is a block diagram of WWS 10. FIGS. 1A-1D will be discussed together. WWS 10 includes wiper 16, output shaft 18, actuator 20, gear reduction 22, controller 24, first sensor 26, second sensor 28, and third sensor 30. WWS 10 is installed on windshield 12 of aircraft 14 and is configured to clear windshield 12 of rain or other debris with greater accuracy than could be achieved using previous windshield wiper systems.

Wiper 16 includes wiper arm 32 and wiper blade 34. Wiper blade 34 is attached to second end 32B of wiper arm 32. Wiper blade 34 includes tip 36 positioned at a distal end of wiper blade 34. Tip 36 is configured to come in close proximity (within 2,54 cm, one inch with first sensor 26, second sensor 28, and third sensor 30 as wiper 16 sweeps across windshield 12. Wiper arm 32 and wiper blade 34 can both be constructed at least partially from a polymer and at least partially from a metal. Further, tip 36 of wiper blade 34 can be constructed at least partially from a metal. Wiper arm 32 is attached to output shaft 18 at first end 32A of wiper arm 32 through a standard mechanical connection. Output shaft 18 extends through a body portion of aircraft 14 near windshield 12, but not through windshield 12. Output shaft 18 is configured to rotate about its central axis, providing rotational energy to first end 32A of wiper arm 32, which in turn forces wiper 16 to traverse across windshield 12 in a sweeping motion.

Actuator 20 is attached to output shaft 18 within the body portion of aircraft 14 and opposite from the attached first end 32A of wiper arm 32. Actuator 20 is configured to provide rotational energy to output shaft 18, rotating output shaft 18 in the process. The rotation of output shaft 18 forces wiper 16 to traverse across windshield 12 in a sweeping motion, therefore actuator 20 provides the energy necessary to drive motion of wiper 16. In the embodiment shown, actuator 20 is a brushless direct current motor. In another embodiment, actuator 20 can be a brushed direct current motor or any other motor configured to provide rotational energy to output shaft 18. Further, actuator 20 is a bi-directional motor that can operate in both directions, allowing output shaft 18, wiper arm 32, and wiper blade 34 to move in both directions. Actuator 20 is attached to output shaft 18 through gear reduction 22, in which gear reduction 22 is positioned between output shaft 18 and actuator 20. In other words, gear reduction 22 is positioned within the body of aircraft 14, attached at one end to output shaft 18, and attached at the other end to actuator 20. Gear reduction 22 has a large gear ratio or gear reduction, meaning that many rotations of actuator 20 will cause only a few degrees of rotation of wiper 16. Gear reduction 22 is configured to allow for precise angular rotation of wiper 16.

Controller 24 is positioned within the body portion of aircraft 14 and controller 24 is connected to actuator 20, first sensor 26, second sensor 28, and third sensor 30. Controller 24 can be connected to each component through electrical wires or a wireless connection to send and receive signals from each of actuator 20, first sensor 26, second sensor 28, and third sensor 30. More specifically, controller 24 is connected to actuator 20 through a wired or wireless connection and controller 24 is configured to send signals to actuator 20 to control operation of actuator 20. Likewise, controller 24 is connected to each of first sensor 26, second sensor 28, and third sensor 30 through a wired or wireless connection and controller 24 is configured to send signals to and receive signals from each of first sensor 26, second sensor 28, and third sensor 30, discussed in detail below.

First sensor 26 is an inductive sensor that is configured to detect a magnetic field and/or a change in a magnetic field near first sensor 26. More specifically, an electrical current flows through first sensor 26, creating a magnetic field around first sensor 26. When a metal component in close proximity moves closer to or away from first sensor 26 the magnetic field of first sensor 26 will change, indicating that a metal component is moving near first sensor 26 or moving away from first sensor 26. In the embodiment described, close proximity means within 2,54 cm (one inch) of first sensor 26. In another unclaimed example, close proximity could mean more than or less than within one inch of first sensor 26. First sensor 26 is positioned at a first location adjacent an inner surface of windshield 12 of aircraft 14. The first location is a position near tip 36 of wiper blade 34 when wiper 16 is in a parked position. Wiper 16 is in a parked position when wiper 16 is approximately perpendicular with bottom edge 12A of windshield 12. When wiper 16 is in the parked position, wiper 16 is stationary and not currently being used to clear rain or other debris from windshield 12 of aircraft 14. First sensor 26 is configured to detect the magnitude of the magnetic field near first sensor 26 and send that information to controller 24. The detected magnetic field or change in magnetic field can be used to identify the position of tip 36 of wiper blade 34 on windshield 12 of aircraft 14.

Second sensor 28 is an inductive sensor that is configured to detect a magnetic field and/or a change in a magnetic field near second sensor 28. More specifically, an electrical current flows through second sensor 28, creating a magnetic field around second sensor 28. When a metal component in close proximity moves closer to or away from second sensor 28 the magnetic field of second sensor 28 will change, indicating that a metal component is moving near second sensor 28 or moving away from second sensor 28. In the embodiment described, close proximity means within 2,54 cm (one inch) of second sensor 28. In another unclaimed example, close proximity could mean more than or less than within one inch of second sensor 28. Second sensor 28 is positioned at a second location adjacent an inner surface of windshield 12 of aircraft 14. The second location is a position near tip 36 of wiper blade 34 when wiper 16 is sweeping across windshield 12. When wiper 16 is in the second location, wiper 16 is sweeping across windshield 12 and currently being used to clear rain or other debris from windshield 12 of aircraft 14. Second sensor 28 is configured to detect the magnitude of the magnetic field near second sensor 28 and send that information to controller 24. The detected magnetic field or change in magnetic field can be used to identify the position of tip 36 of wiper blade 34 on windshield 12 of aircraft 14.

Third sensor 30 is an inductive sensor that is configured to detect a magnetic field and/or a change in a magnetic field near third sensor 30. More specifically, an electrical current flows through third sensor 30, creating a magnetic field around third sensor 30. When a metal component in close proximity moves closer to or away from third sensor 30 the magnetic field of third sensor 30 will change, indicating that a metal component is moving near third sensor 30 or moving away from third sensor 30. In the embodiment described, close proximity means within 2,54 cm (one inch) of third sensor 30. In another unclaimed example, close proximity could mean more than or less than within one inch of third sensor 30. Third sensor 30 is positioned at a third location adjacent an inner surface of windshield 12 of aircraft 14. The third location is a position near tip 36 of wiper blade 34 when wiper 16 reaches its sweeping limit and is about to change its sweeping direction. When wiper 16 is in the third location, wiper 16 has completed its sweeping path in a first direction and is reversing its sweeping path in a second direction across windshield 12. Third sensor 30 is configured to detect the magnitude of the magnetic field near third sensor 30 and send that information to controller 24. The detected magnetic field or change in magnetic field can be used to identify the position of tip 36 of wiper blade 34 on windshield 12 of aircraft 14.

In operation, wiper 16 begins in the parked position and remains in the parked position until a pilot, co-pilot, or an automated system activates WWS 10. Once WWS 10 is activated, wiper 16 sweeps across windshield 12 toward the second location and second sensor 28. As tip 36 of wiper blade 34 sweeps closer to second sensor 28, the magnitude of the magnetic field around second sensor 28 begins to change due to the metal in tip 36. The data collected/detected by second sensor 28 is then sent to controller 24 for processing. Wiper 16 continues to sweep past second sensor 28 in the direction of third sensor 30. As tip 36 of wiper blade 34 sweeps closer to third sensor 30, the magnitude of the magnetic field around third sensor 30 begins to change due to the metal in tip 36. The data collected/detected by third sensor 30 is then sent to controller 24 for processing. Once wiper 16 reaches its sweep limits near third sensor 30, wiper 16 will reverse directions and sweep in the direction of second sensor 28. The sweep limits are coded into the software of controller 24 and define how far wiper 16 will sweep in each direction. The back and forth sweeping motion is continued to clean water or other debris from windshield 12 until WWS 10 is deactivated by the pilot, co-pilot, or an automated system.

Controller 24 processes the incoming data from first sensor 26, second sensor 28, and third sensor 30 and uses the data to identify the location of tip 36 of wiper blade 34. In previous windshield wiper systems, the sweep limits coded into controller 24 were used to control the position of wiper 16, but the coded position does not always represent the actual position of wiper 16 on windshield 12. Due to unpredicted forces, such as high wind forces, flexing of wiper blade 34, or degradation of parts of WWS 10, wiper 16 can either under-sweep or over-sweep. In an under-sweep condition, wiper 16 is not reaching its coded sweep limits before reversing direction. Thus, when under-sweep occurs, windshield 12 is not being sufficiently cleared of water or other debris. In an over-sweep condition, wiper 16 is overshooting its coded sweep limits and is travelling beyond the perimeter of windshield 12 and onto the frame surrounding windshield 12. When over-sweep occurs, unpredicted additional loads are applied to actuator 10 and wiper blade 34 causing damage to actuator 20 and wiper blade 34 and shortening the useful lifespan of actuator 10 and wiper blade 34. As such, neither an under-sweep condition nor an over-sweep condition are desirable.

WWS 10 remedies the issue of under-sweep and over-sweep by using data from first sensor 26, second sensor 28, and third sensor 30 to accurately identify the actual location of tip 36 of wiper blade 34 in real time. If under sweep is occurring, controller 24 can send a signal to actuator 20 to continue sweeping in the first direction until tip 36 reaches third sensor 30. Likewise, if under sweep is occurring in the other direction, controller 24 can send a signal to actuator 20 to continue sweeping in the second direction until tip 36 reaches first sensor 26. If over-sweep is occurring, controller 24 can send a signal to actuator 20 to stop sweeping in the first direction because tip 36 has already reached third sensor 30 and its coded sweep limit. Likewise, if over-sweep is occurring in the other direction, controller 24 can send a signal to actuator 20 to stop sweeping in the second direction because tip 36 has already reached second sensor 28 and its coded sweep limit. Thus, WWS 10 is utilized to ensure that wiper 16 is operating correctly and is reaching its coded sweeping limits. WWS 10 uses the data from first sensor 26, second sensor 28, and third sensor 30 to identify the actual location of tip 36 on windshield 12 and then adjust the sweeping of wiper 16 to come within plus or minus one degree of the software coded sweeping limits.

WWS 10 improves the accuracy and performance of the overall wiper system. Any deviation in tip 36 position due to external loads or faulty externals (actuator/gearbox slip) which cannot be sensed by the software in controller 24 will be detected by first sensor 26, second sensor 28, and third sensor 30, then controller 24 will adjust the sweep limits accordingly to remedy the issue. WWS 10 is an intelligent closed loop system used to control the sweep limits of wiper 16 in an efficient and simple solution. WWS 10 can be used with existing wipers 16 because no sensor needs to be installed on the wipers themselves, rather the already present metal in wiper blade 34 is used to create a change in the magnetic field near first sensor 26, second sensor 28, and third sensor 30. Further, unlike previous infrared sensing systems, dirt or other debris near the sensors does not alter the performance of WWS 10. The magnetic field near first sensor 26, second sensor 28, and third sensor 30 will still change and function correctly even if dirt or other debris covers the sensors. WWS 10 is a simple solution that meets customer requirements and controls the angular position of wiper 16 to within plus or minus one degree of the software coded sweep limits. WWS 10 will extend the lifespan of wiper 16 by preventing unexpected forces and loads on wiper 16 due to over-shoot condition, ultimately resulting in cost savings to the customer. WWS 10 provides many benefits over previous aircraft windshield wiper systems.

## Claims

1. A windshield wiper system for use on a windshield of an aircraft, the windshield wiper system comprising:
a wiper (16) comprising a wiper arm (32) and a wiper blade (34) attached to a first end of the wiper arm, wherein the wiper blade is comprised at least partially of a metal, wherein the wiper blade includes a tip (36) and wherein the tip (36) of the wiper blade (34) is comprised at least partially of a metal;
a first sensor (26), a second sensor (28) and a third sensor (30), each positioned adjacent the tip (36) of the wiper blade on an inside of the windshield of the aircraft, wherein the first sensor, the second sensor and the third sensor are each configured to detect a magnetic field when the tip is within 2, 54 cm (one inch) of the first sensor, the second sensor and the third sensor; and
a controller (24) connected to each of the first sensor, the second sensor and the third sensor, wherein the controller is configured to receive signals from each of the first sensor, the second sensor and the third sensor, indicating the magnitude of the magnetic field detected by each of the first sensor, the second sensor and the third sensor respectively, wherein the controller includes sweep limits coded into controller software, wherein the sweep limits define how far the wiper will sweep in each direction, and wherein the controller is connected to an actuator (20) configured to provide rotation energy to drive the wiper across the windshield in accordance with the sweep limits;
wherein the first sensor is positioned at a first location being the wiper parking position, such that the first sensor indicates when the wiper blade is in the parked position;
wherein the second sensor is positioned at a second location where the wiper is sweeping across the windshield and is associated with a sweeping limit such that the second sensor indicates when the wiper blade reaches the sweeping limit and needs to change sweeping direction; and
wherein the third sensor is positioned at a third location where the wiper is about to change its sweeping direction and is associated with a sweeping limit such that the third sensor indicates when the wiper blade reaches its sweeping limit and needs to change sweeping direction;
wherein the controller is further configured to process data from the first sensor, the second sensor and the third sensor to identify an actual location of the tip of the wiper blade in real time and:
if the controller determines that under sweep of the wiper blade is occurring in a first direction, the controller is configured to signal the actuator to continue sweeping the wiper blade in the first direction until the blade tip reaches the third sensor;
if the controller determines that under sweep of the wiper blade is occurring in a second direction, the controller is configured to signal the actuator to continue sweeping the wiper blade in the second direction until the blade tip reaches the first sensor;
if the controller determines that over sweep of the wiper blade is occurring in a first direction based on data from the third sensor and its coded sweep limit, the controller is configured to signal the actuator to stop sweeping the wiper blade in the first direction;
if the controller determines that over sweep of the wiper blade is occurring in a second direction based on data from the second sensor and its coded sweep limit the controller is configured to signal the actuator to stop sweeping the wiper blade in the second direction;
whereby the controller is configured to use the actual location of the tip of the wiper blade to adjust the sweep of the wiper blade to come within plus or minus one degree of the sweep limits coded into the controller software.

2. The windshield wiper system of claim 1, and further comprising:
an output shaft (18) attached to a second end of the wiper arm; and
an actuator (20) attached to the output shaft;
wherein the actuator is configured to rotate the output shaft which in turn forces the wiper arm and attached wiper blade to sweep across the windshield of the aircraft.

3. The windshield wiper system of claim 2, wherein the actuator (20) is a brushless direct current motor, and wherein a gear reduction (22) is attached to and positioned between the output shaft and the actuator.

4. The windshield wiper system of claim 2, wherein the controller (24) is connected to the actuator (20), and wherein the controller is configured to send signals to the actuator to control operation of the actuator.

5. The windshield wiper system of claim 1, wherein:
the wiper is in a parked position when the wiper is perpendicular with a bottom edge (12A) of the windshield; and
the wiper is stationary when the wiper is in the parked positioned.

6. A method of operating a windshield wiper system for use on a windshield of an aircraft, the method comprising:
providing, by an actuator (20), rotational energy to sweep a wiper blade across a windshield of an aircraft;
detecting, by a first sensor (26), a second sensor (28) and a third sensor,(30), a magnetic field, wherein the magnetic field is indicative of a position of a metallic tip (36) of a wiper blade (34) when the tip is within 2,54 cm (one inch) of the first sensor, the second sensor and the third sensor, wherein the tip (36) of the wiper blade (34) is comprised at least partially of a metal, and wherein the first sensor, the second sensor and the third sensor are positioned adjacent an inside of the windshield of the aircraft; and
providing, by each of the first sensor, the second sensor and the third sensor, a signal to a controller (24) indicating the magnitude of the magnetic field detected by each of the first sensor, the second sensor and the third sensor, wherein the controller is communicatively coupled to each of the first sensor, the second sensor and the third sensor;
processing, by the controller, the signal from the first sensor, the second sensor and the third sensor to identify an actual location of the tip of the wiper blade in real time, wherein the controller includes sweep limits coded into the controller software, wherein the sweep limits define how far the wiper will sweep in each direction;
wherein the wiper blade is attached to a first end of a wiper arm;
wherein the first sensor is positioned at a first location being the wiper parking position, such that the first sensor indicates when the wiper blade is in the parked position;
wherein the second sensor is positioned at a second location where the wiper is sweeping across the windshield and is associated with a sweeping limit such that the second sensor indicates when the wiper blade reaches the sweeping limit and needs to change sweeping direction; and
wherein the third sensor is positioned at a third location where the wiper is about to change its sweeping direction and is associated with a sweeping limit such that the third sensor indicates when the wiper blade reaches the sweeping limit and needs to change sweeping direction; and
wherein the wiper blade (34) is attached to a first end of a wiper arm (32);
wherein if the controller determines that undersweep of the wiper blade is occurring in a first direction, the controller is configured to signal the actuator to continue sweeping the wiper blade in the first direction until the blade tip reaches the third sensor;
if the controller determines that undersweep of the wiper blade is occurring in a second direction, the controller is configured to signal the actuator to continue sweeping the wiper blade in the second direction until the blade tip reaches the first sensor;
if the controller determines that oversweep of the wiper blade is occurring in a first direction based on data from the third sensor and the coded sweep limit, the controller is configured to signal the actuator to stop sweeping the wiper blade in the first direction;
if the controller determines that oversweep of the wiper blade is occurring in a second direction based on data from the second sensor and the coded sweep limit the controller is configured to signal the actuator to stop sweeping the wiper blade in the second direction;
whereby the controller is configured to use the actual location of the tip of the wiper blade to adjust the sweep of the wiper blade to come within plus or minus one degree of the sweep limits coded into the controller software.

## Patentansprüche

1. Scheibenwischersystem zur Verwendung an einer Windschutzscheibe eines Luftfahrzeugs, wobei das Scheibenwischersystem umfasst:
einen Wischer (16), umfassend einen Wischerarm (32) und ein Wischerblatt (34), das an einem ersten Ende des Wischerarms befestigt ist, wobei das Wischerblatt zumindest teilweise aus einem Metall besteht, wobei das Wischerblatt eine Spitze (36) beinhaltet und wobei die Spitze (36) des Wischerblatts (34) zumindest teilweise aus einem Metall besteht;
einen ersten Sensor (26), einen zweiten Sensor (28) und einen dritten Sensor (30), die jeweils benachbart der Spitze (36) des Wischerblatts auf einer Innenseite der Windschutzscheibe des Luftfahrzeugs positioniert sind, wobei der erste Sensor, der zweite Sensor und der dritte Sensor jeweils konfiguriert sind, ein Magnetfeld zu detektieren, wenn die Spitze innerhalb von 2,54 cm (einem Zoll) des ersten Sensors, des zweiten Sensors und des dritten Sensors ist; und
eine Steuerung (24), die mit jedem des ersten Sensors, des zweiten Sensors und des dritten Sensors verbunden ist, wobei die Steuerung konfiguriert ist, Signale von jedem des ersten Sensors, des zweiten Sensors und des dritten Sensors zu empfangen, die die Stärke des von jedem des ersten Sensors, des zweiten Sensors und des dritten Sensors jeweils detektierten Magnetfelds anzeigen, wobei die Steuerung Schwenkgrenzen beinhaltet, die in Steuerungssoftware codiert sind, wobei die Schwenkgrenzen definieren, wie weit der Wischer in jeder Richtung schwenken wird, und wobei die Steuerung mit einem Aktuator (20) verbunden ist, der konfiguriert ist, Rotationsenergie bereitzustellen, um den Wischer in Übereinstimmung mit den Schwenkgrenzen über die Windschutzscheibe anzutreiben;
wobei der erste Sensor an einer ersten Position positioniert ist, die die Wischerparkposition ist, so dass der erste Sensor anzeigt, wenn das Wischerblatt in der Parkposition ist;
wobei der zweite Sensor an einer zweiten Position positioniert ist, an der der Wischer über die Windschutzscheibe schwenkt, und mit einer Schwenkgrenze assoziiert ist, so dass der zweite Sensor anzeigt, wenn das Wischerblatt die Schwenkgrenze erreicht und die Schwenkrichtung ändern muss; und
wobei der dritte Sensor an einer dritten Position positioniert ist, an der der Wischer im Begriff ist, seine Schwenkrichtung zu ändern, und mit einer Schwenkgrenze assoziiert ist, so dass der dritte Sensor anzeigt, wenn das Wischerblatt seine Schwenkgrenze erreicht und die Schwenkrichtung ändern muss;
wobei die Steuerung ferner konfiguriert ist, Daten von dem ersten Sensor, dem zweiten Sensor und dem dritten Sensor zu verarbeiten, um eine tatsächliche Position der Spitze des Wischerblatts in Echtzeit zu identifizieren, und:
wenn die Steuerung bestimmt, dass eine Unterschwenkung des Wischerblatts in einer ersten Richtung auftritt, die Steuerung konfiguriert ist, dem Aktuator zu signalisieren, das Schwenken des Wischerblatts in der ersten Richtung fortzusetzen, bis die Schaufelspitze den dritten Sensor erreicht;
wenn die Steuerung bestimmt, dass eine Unterschwenkung des Wischerblatts in einer zweiten Richtung auftritt, die Steuerung konfiguriert ist, dem Aktuator zu signalisieren, das Schwenken des Wischerblatts in der zweiten Richtung fortzusetzen, bis die Schaufelspitze den ersten Sensor erreicht;
wenn die Steuerung bestimmt, dass eine Überschwenkung des Wischerblatts in einer ersten Richtung basierend auf Daten von dem dritten Sensor und seiner codierten Schwenkgrenze auftritt, die Steuerung konfiguriert ist, dem Aktuator zu signalisieren, das Schwenken des Wischerblatts in der ersten Richtung zu stoppen;
wenn die Steuerung bestimmt, dass eine Überschwenkung des Wischerblatts in einer zweiten Richtung basierend auf Daten von dem zweiten Sensor und seiner codierten Schwenkgrenze auftritt, die Steuerung konfiguriert ist, dem Aktuator zu signalisieren, das Schwenken des Wischerblatts in der zweiten Richtung zu stoppen;
wodurch die Steuerung konfiguriert ist, die tatsächliche Position der Spitze des Wischerblatts zu verwenden, um die Schwenkbewegung des Wischerblatts so anzupassen, dass sie innerhalb von plus oder minus einem Grad der in die Steuerungssoftware codierten Schwenkgrenzen liegt.

2. Scheibenwischersystem nach Anspruch 1, und ferner umfassend:
eine Abtriebswelle (18), die an einem zweiten Ende des Wischerarms befestigt ist; und
einen Aktuator (20), der an der Abtriebswelle befestigt ist;
wobei der Aktuator konfiguriert ist, die Abtriebswelle zu drehen, die wiederum den Wischerarm und das befestigte Wischerblatt zwingt, über die Windschutzscheibe des Luftfahrzeugs zu schwenken.

3. Scheibenwischersystem nach Anspruch 2, wobei der Aktuator (20) ein bürstenloser Gleichstrommotor ist, und wobei eine Getriebeuntersetzung (22) an der Abtriebswelle und dem Aktuator befestigt und zwischen diesen positioniert ist.

4. Scheibenwischersystem nach Anspruch 2, wobei die Steuerung (24) mit dem Aktuator (20) verbunden ist, und wobei die Steuerung konfiguriert ist, Signale an den Aktuator zu senden, um den Betrieb des Aktuators zu steuern.

5. Scheibenwischersystem nach Anspruch 1, wobei:
der Wischer in einer Parkposition ist, wenn der Wischer senkrecht zu einer Unterkante (12A) der Windschutzscheibe ist; und
der Wischer stillstehend ist, wenn der Wischer in der Parkposition ist.

6. Verfahren zum Betreiben eines Scheibenwischersystems zur Verwendung an einer Windschutzscheibe eines Luftfahrzeugs, wobei das Verfahren umfasst:
Bereitstellen, durch einen Aktuator (20), von Rotationsenergie zum Schwenken eines Wischerblatts über eine Windschutzscheibe eines Luftfahrzeugs;
Detektieren, durch einen ersten Sensor (26), einen zweiten Sensor (28) und einen dritten Sensor (30), eines Magnetfelds, wobei das Magnetfeld eine Position einer metallischen Spitze (36) eines Wischerblatts (34) anzeigt, wenn die Spitze innerhalb von 2,54 cm (einem Zoll) des ersten Sensors, des zweiten Sensors und des dritten Sensors ist, wobei die Spitze (36) des Wischerblatts (34) zumindest teilweise aus einem Metall besteht, und wobei der erste Sensor, der zweite Sensor und der dritte Sensor benachbart einer Innenseite der Windschutzscheibe des Luftfahrzeugs positioniert sind; und
Bereitstellen, durch jeden des ersten Sensors, des zweiten Sensors und des dritten Sensors, eines Signals an eine Steuerung (24), das die Stärke des von jedem des ersten Sensors, des zweiten Sensors und des dritten Sensors detektierten Magnetfelds anzeigt,
wobei die Steuerung kommunikativ mit jedem des ersten Sensors, des zweiten Sensors und des dritten Sensors gekoppelt ist;
Verarbeiten, durch die Steuerung, des Signals von dem ersten Sensor, dem zweiten Sensor und dem dritten Sensor, um eine tatsächliche Position der Spitze des Wischerblatts in Echtzeit zu identifizieren, wobei die Steuerung Schwenkgrenzen beinhaltet, die in die Steuerungssoftware codiert sind, wobei die Schwenkgrenzen definieren, wie weit der Wischer in jeder Richtung schwenken wird;
wobei das Wischerblatt an einem ersten Ende eines Wischerarms befestigt ist;
wobei der erste Sensor an einer ersten Position positioniert ist, die die Wischerparkposition ist, so dass der erste Sensor anzeigt, wenn das Wischerblatt in der Parkposition ist;
wobei der zweite Sensor an einer zweiten Position positioniert ist, an der der Wischer über die Windschutzscheibe schwenkt, und mit einer Schwenkgrenze assoziiert ist, so dass der zweite Sensor anzeigt, wenn das Wischerblatt die Schwenkgrenze erreicht und die Schwenkrichtung ändern muss; und
wobei der dritte Sensor an einer dritten Position positioniert ist, an der der Wischer im Begriff ist, seine Schwenkrichtung zu ändern, und mit einer Schwenkgrenze assoziiert ist, so dass der dritte Sensor anzeigt, wenn das Wischerblatt die Schwenkgrenze erreicht und die Schwenkrichtung ändern muss; und
wobei das Wischerblatt (34) an einem ersten Ende eines Wischerarms (32) befestigt ist;
wobei, wenn die Steuerung bestimmt, dass eine Unterschwenkung des Wischerblatts in einer ersten Richtung auftritt, die Steuerung konfiguriert ist, dem Aktuator zu signalisieren, das Schwenken des Wischerblatts in der ersten Richtung fortzusetzen, bis die Schaufelspitze den dritten Sensor erreicht;
wenn die Steuerung bestimmt, dass eine Unterschwenkung des Wischerblatts in einer zweiten Richtung auftritt, die Steuerung konfiguriert ist, dem Aktuator zu signalisieren, das Schwenken des Wischerblatts in der zweiten Richtung fortzusetzen, bis die Schaufelspitze den ersten Sensor erreicht;
wenn die Steuerung bestimmt, dass eine Überschwenkung des Wischerblatts in einer ersten Richtung basierend auf Daten von dem dritten Sensor und der codierten Schwenkgrenze auftritt, die Steuerung konfiguriert ist, dem Aktuator zu signalisieren, das Schwenken des Wischerblatts in der ersten Richtung zu stoppen;
wenn die Steuerung bestimmt, dass eine Überschwenkung des Wischerblatts in einer zweiten Richtung basierend auf Daten von dem zweiten Sensor und der codierten Schwenkgrenze auftritt, die Steuerung konfiguriert ist, dem Aktuator zu signalisieren, das Schwenken des Wischerblatts in der zweiten Richtung zu stoppen;
wodurch die Steuerung konfiguriert ist, die tatsächliche Position der Spitze des Wischerblatts zu verwenden, um die Schwenkbewegung des Wischerblatts so anzupassen, dass sie innerhalb von plus oder minus einem Grad der in die Steuerungssoftware codierten Schwenkgrenzen liegt.

## Revendications

1. Système d'essuie-glace de pare-brise pour une utilisation sur un pare-brise d'un aéronef, le système d'essuie-glace comprenant :
un essuie-glace (16) comprenant un bras (32) d'essuie-glace et une lame (34) d'essuie-glace fixée à une première extrémité du bras d'essuie-glace, dans lequel la lame d'essuie-glace est composée au moins partiellement de métal, dans lequel la lame d'essuie-glace comporte une pointe (36) et dans lequel la pointe (36) de la lame (34) d'essuie-glace est composée au moins partiellement de métal ;
un premier capteur (26), un deuxième capteur (28) et un troisième capteur (30), chacun positionné adjacent à la pointe (36) de la lame d'essuie-glace sur la face intérieure du pare-brise de l'aéronef, dans lequel le premier capteur, le deuxième capteur et le troisième capteur sont chacun configurés pour détecter un champ magnétique lorsque la pointe se trouve à 2,54 cm (un pouce) ou moins du premier capteur, du deuxième capteur et du troisième capteur ; et
un dispositif de commande (24) relié à chacun du premier capteur, du deuxième capteur et du troisième capteur, dans lequel le dispositif de commande est configuré pour recevoir des signaux de chacun du premier capteur, du deuxième capteur et du troisième capteur, indiquant l'amplitude du champ magnétique détecté par chacun du premier capteur, du deuxième capteur et du troisième capteur respectivement, dans lequel le dispositif de commande comporte des limites de balayage codées dans le logiciel du dispositif de commande, dans lequel les limites de balayage définissent la distance que l'essuie-glace parcourra dans chaque direction, et dans lequel le dispositif de commande est relié à un actionneur (20) configuré pour fournir l'énergie de rotation nécessaire pour entraîner l'essuie-glace sur le pare-brise conformément aux limites de balayage ;
dans lequel le premier capteur est positionné à un premier emplacement étant la position de stationnement de l'essuie-glace, de sorte que le premier capteur indique lorsque la lame d'essuie-glace est en position de stationnement ;
dans lequel le deuxième capteur est positionné à un deuxième emplacement où l'essuie-glace balaie le pare-brise et est associé à une limite de balayage de sorte que le deuxième capteur indique quand la lame d'essuie-glace atteint la limite de balayage et doit changer de direction de balayage ; et
dans lequel le troisième capteur est positionné à un troisième emplacement où l'essuie-glace est sur le point de changer de direction de balayage et est associé à une limite de balayage de sorte que le troisième capteur indique quand la lame d'essuie-glace atteint sa limite de balayage et doit changer de direction de balayage ;
dans lequel le dispositif de commande est en outre configuré pour traiter les données du premier capteur, du deuxième capteur et du troisième capteur afin d'identifier en temps réel l'emplacement réel de la pointe de la lame d'essuie-glace et :
si le dispositif de commande détermine qu'un balayage inférieur de la lame d'essuie-glace se produit dans une première direction, le dispositif de commande est configuré pour signaler à l'actionneur de continuer à balayer la lame d'essuie-glace dans la première direction jusqu'à ce que la pointe de la lame atteigne le troisième capteur ;
si le dispositif de commande détermine qu'un balayage inférieur de la lame d'essuie-glace se produit dans une seconde direction, le dispositif de commande est configuré pour signaler à l'actionneur de continuer à balayer la lame d'essuie-glace dans la seconde direction jusqu'à ce que la pointe de la lame atteigne le premier capteur ;
si le dispositif de commande détermine qu'un balayage supérieur de la lame d'essuie-glace se produit dans une première direction en fonction des données du troisième capteur et de sa limite de balayage codée, le dispositif de commande est configuré pour signaler à l'actionneur d'arrêter de balayer la lame d'essuie-glace dans la première direction ;
si le dispositif de commande détermine qu'un balayage supérieur de la lame d'essuie-glace se produit dans une seconde direction en fonction des données du deuxième capteur et de sa limite de balayage codée, le dispositif de commande est configuré pour signaler à l'actionneur d'arrêter de balayer la lame d'essuie-glace dans la seconde direction ;
moyennant quoi le dispositif de commande est configuré pour utiliser l'emplacement réel de la pointe de la lame d'essuie-glace afin d'ajuster le balayage de la lame d'essuie-glace à plus ou moins un degré des limites de balayage codées dans le logiciel du dispositif de commande.

2. Système d'essuie-glace de pare-brise selon la revendication 1 et comprenant en outre :
un arbre (18) de sortie fixé à une seconde extrémité du bras d'essuie-glace ; et
un actionneur (20) fixé à l'arbre de sortie ;
dans lequel l'actionneur est configuré pour faire tourner l'arbre de sortie qui, à son tour, contraint le bras d'essuie-glace et la lame d'essuie-glace qui y est fixé à balayer le pare-brise de l'aéronef.

3. Système d'essuie-glace de pare-brise selon la revendication 2, dans lequel l'actionneur (20) est un moteur à courant continu sans balais, et dans lequel un réducteur (22) de vitesse est fixé et positionné entre l'arbre de sortie et l'actionneur.

4. Système d'essuie-glace de pare-brise selon la revendication 2, dans lequel le dispositif de commande (24) est relié à l'actionneur (20), et dans lequel le dispositif de commande est configuré pour envoyer des signaux à l'actionneur afin de commander le fonctionnement de l'actionneur.

5. Système d'essuie-glace de pare-brise selon la revendication 1, dans lequel :
l'essuie-glace est en position de stationnement lorsque l'essuie-glace est perpendiculaire au bord (12A) inférieur du pare-brise ; et
l'essuie-glace est immobile lorsque l'essuie-glace est en position de stationnement.

6. Procédé d'utilisation d'un système d'essuie-glace de pare-brise pour une utilisation sur un pare-brise d'un aéronef, le procédé comprenant :
la fourniture, par un actionneur (20), d'une énergie de rotation pour balayer une lame d'essuie-glace sur le pare-brise d'un aéronef ;
la détection, par un premier capteur (26), un deuxième capteur (28) et un troisième capteur (30), d'un champ magnétique, dans lequel le champ magnétique indique l'emplacement de la pointe (36) métallique d'une lame (34) d'essuie-glace lorsque cette pointe est à 2,54 cm (un pouce) ou moins du premier capteur, du deuxième capteur et du troisième capteur, dans lequel la pointe (36) de la lame (34) d'essuie-glace est composée au moins partiellement de métal, et dans lequel le premier capteur, le deuxième capteur et le troisième capteur sont positionnés adjacents à un intérieur du pare-brise de l'aéronef ; et
la fourniture, par chacun du premier capteur, du deuxième capteur et du troisième capteur, d'un signal à un dispositif de commande (24) indiquant l'amplitude du champ magnétique détecté par chacun du premier capteur, du deuxième capteur et du troisième capteur, dans lequel le dispositif de commande est couplé en communication à chacun du premier capteur, du deuxième capteur et du troisième capteur ;
le traitement, par le dispositif de commande, du signal du premier capteur, du deuxième capteur et du troisième capteur pour identifier en temps réel un emplacement réel de la pointe de la lame d'essuie-glace, dans lequel le dispositif de commande comporte des limites de balayage codées dans le logiciel du dispositif de commande, dans lequel les limites de balayage définissent la distance que l'essuie-glace parcourra dans chaque direction ;
dans lequel la lame d'essuie-glace est fixée à une première extrémité d'un bras d'essuie-glace ;
dans lequel le premier capteur est positionné à un premier emplacement étant la position de stationnement de l'essuie-glace, de sorte que le premier capteur indique lorsque la lame d'essuie-glace est en position de stationnement ;
dans lequel le deuxième capteur est positionné à un deuxième emplacement où l'essuie-glace balaie le pare-brise et est associé à une limite de balayage de sorte que le deuxième capteur indique quand la lame d'essuie-glace atteint la limite de balayage et doit changer de direction de balayage ; et
dans lequel le troisième capteur est positionné à un troisième emplacement où l'essuie-glace s'apprête à changer sa direction de balayage et est associé à une limite de balayage de sorte que le troisième capteur indique quand la lame d'essuie-glace atteint la limite de balayage et doit changer de direction de balayage ; et
dans lequel la lame (34) d'essuie-glace est fixée à une première extrémité du bras (32) d'essuie-glace ;
dans lequel le dispositif de commande détermine qu'un balayage inférieur de la lame d'essuie-glace se produit dans une première direction, le dispositif de commande est configuré pour signaler à l'actionneur de continuer à balayer la lame d'essuie-glace dans la première direction jusqu'à ce que la pointe de la lame atteigne le troisième capteur ;
si le dispositif de commande détermine qu'un balayage inférieur de la lame d'essuie-glace se produit dans une seconde direction, le dispositif de commande est configuré pour signaler à l'actionneur de continuer à balayer la lame d'essuie-glace dans la seconde direction jusqu'à ce que la pointe de la lame atteigne le premier capteur ;
si le dispositif de commande détermine qu'un balayage supérieur de la lame d'essuie-glace se produit dans une première direction sur la base de données du troisième capteur et de la limite de balayage codée, le dispositif de commande est configuré pour signaler à l'actionneur d'arrêter de balayer la lame d'essuie-glace dans la première direction ;
si le dispositif de commande détermine qu'un balayage supérieur de la lame d'essuie-glace se produit dans une seconde direction sur la base de données du deuxième capteur et de la limite de balayage codée, le dispositif de commande est configuré pour signaler à l'actionneur d'arrêter de balayer la lame d'essuie-glace dans la seconde direction ;
moyennant quoi le dispositif de commande est configuré pour utiliser l'emplacement réel de la pointe de la lame d'essuie-glace afin d'ajuster le balayage de la lame d'essuie-glace à plus ou moins un degré des limites de balayage codées dans le logiciel du dispositif de commande.
